# EUROPÄISCHE PATENTSCHRIFT

(11) **EP 2 946 226 B1**
(45) Veröffentlichungstag und Bekanntmachung des Hinweises auf die Patenterteilung: **07.07.2021**
(21) Anmeldenummer: 14700075.6
(22) Anmeldetag: 07.01.2014
(51) Int. Cl.: G01S 7/497, G01S 7/486, G01S 17/894, B60R 25/20

(54) **UNIVERSELLE SENSORANORDNUNG ZUR ERFASSUNG VON BEDIENGESTEN AN FAHRZEUGEN**
UNIVERSAL SENSOR ASSEMBLY FOR DETECTING OPERATOR GESTURES IN VEHICLES
ENSEMBLE DE DÉTECTION UNIVERSEL CONÇU POUR DÉTECTER DES GESTES DE COMMANDE DANS DES VÉHICULES

(30) Priorität: 18.01.2013 DE 102013100522
(43) Veröffentlichungstag der Anmeldung: 25.11.2015
(73) Patentinhaber: Huf Hülsbeck & Fürst GmbH & Co. KG, 42551 Velbert (DE)
(72) Erfinder: SCHINDLER, Mirko, 42549 Velbert (DE)
(74) Vertreter: Zenz Patentanwälte Partnerschaft mbB
(86) Internationale Anmeldenummer: PCT/EP2014/050107
(87) Internationale Veröffentlichungsnummer: WO 2014/111287

(56) Entgegenhaltungen:
- EP-A1- 1 927 867
- EP-A2- 1 798 577
- WO-A1-2004/055544
- DE-A1- 10 147 807
- HOLTE M B ET AL: "Fusion of range and intensity information for view invariant gesture recognition", COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23. Juni 2008 (2008-06-23), Seiten 1-7, XP031285717, ISBN: 978-1-4244-2339-2
- None

## Beschreibung

Die Erfindung betrifft Sensoranordnungen, welche zur optisch gestützten Erkennung von Bedienungsgesten oder Bedienungshandlungen an Kraftfahrzeugen eingesetzt werden.

Insbesondere betrifft die Erfindung Sensoranordnungen, welche zeitlich und räumlich aufgelöste Informationen erfassen und auswerten können, um den Bedienwillen eines Benutzers zu erkennen.

Im Stand der Technik sind optische Verfahren bekannt, die Betätigungen in Reaktion auf eine Auswertung von Bildinformationen erkennen und daraufhin z.B. Schaltvorgänge auslösen. Beispielsweise sind hier automatische Videoauswertungen von Überwachungssystemen zu nennen, welche Muster oder Bewegungen aus einzelnen Bildern oder einer Folge von Bilder herauslesen. Außerdem sind zahlreiche andere optisch gestützte Systeme bekannt, wobei zu den grundlegendsten Lichtschranken oder Helligkeitssensoren gehören. Optische Systeme mit höherer Komplexität bedienen sich jedoch oft eines Arrays von optisch sensitiven Erfassungseinheiten, meist als Pixel bezeichnet, die parallel optische Informationen aufnehmen, beispielsweise in Gestalt eines CCD-Arrays.

Die EP1927867 offenbart einen optoelektronischen Sensor zur Erfassung von Objekten in einem dreidimensionalen Überwachungsbereich mit mindestens einem Bildsensor, der mittels einer Vielzahl von Lichtempfangselementen ein Pixelbild des Überwachungsbereichs aufnehmen kann sowie mit mindestens einer Steuerung, die für die Erfassung eines Objekts aus Bilddaten des Pixelbildes ausgebildet ist. Dabei ist eine Mehrzahl von Bildsensoren vorgesehen, die jeweils mindestens eine Pixelzeile mit Lichtempfangselementen aufweisen und die Bildsensoren sind voneinander beabstandet angeordnet, so dass jeder Bildsensor eine eigene Ebene des Überwachungsbereichs aufnehmen kann.

Die DE 10 2008 025 669 A1 offenbart einen optischen Sensor, welcher eine Geste detektiert, woraufhin ein Schließelement eines Fahrzeugs automatisch bewegt wird.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug.

Die WO 2012/084222 A1 offenbart einen optischen Sensor zur Betätigung und Überwachung eines Schließelements.

Da die Gestensteuerung in verschiedenen technischen Bereichen immer größere Akzeptanz erfährt, wurden auch Versuche unternommen, solche rein optischen Systeme zur Erkennung des Bedienwunsches bei Kraftfahrzeugen zu verwenden. Bei diesen Systemen herrscht jedoch weiterhin die Erfassung von Bedienungen über kapazitive Systeme vor.

Die DE 10 2011 089 195 A1 offenbart ein System zur berührungslosen Erfassung von Gegenständen und Bediengesten mit einer optisch gestützten Einrichtung ähnlicher Art, wie sie auch für die Erfindung einsetzbar ist. Allerdings sind derartige Systeme oft individuell auf den Einsatzbereich am Fahrzeug abzustimmen, so dass verschiedene Einrichtungen für verschiedene Montagepositionen und Einbaubedingungen vorzuhalten sind.

Aufgabe der Erfindung ist es, ein optisch gestütztes und universelles System zu Bedienkontrolle bei Zugangssystemen für Fahrzeuge bereitzustellen.

Diese Aufgabe wird durch eine Einrichtung mit den Merkmalen des Anspruchs 1 gelöst.

Das erfindungsgemäße System bedient sich einer optischen Erfassung, jedoch keiner reinen Bilderfassung. Es wird ein Pixelarray mit einer zeitlichen Ansteuerung verwendet, welches Abstandserfassungen erlaubt und eine Objektbewegung erfassen kann, indem die Abstandsinformation in einer zeitlichen Folge analysiert werden. Es sind Erfassungseinrichtungen bekannt, welche eine pixelbezogene Ortsinformation, insbesondere eine Distanz von der Sensor- oder Erfassungseinrichtung erfassen. Diese Systeme werden beispielsweise, je nach angewandtem Auswertungsverfahren, als "Time-of-Flight"-Systeme oder auch als "3D-Imager" oder "Range Imager" bezeichnet. Die Anwendungsgebiete solcher Systeme liegen im Bereich der industriellen Automatisierungstechnik, in der Sicherheitstechnik und im Automobilbereich. In einem Auto werden 3D-Sensoren in Spurhaltesystemen, zum Fußgängerschutz oder als Einparkhilfe eingesetzt. Sowohl Konzepte der Triangulation als auch der Interferometrie und auch der Lichtlaufzeitmessung (Time-of-Flight (ToF)) können mit optischen Sensoren umgesetzt werden.

Das erfindungsgemäße System weist ein Array von lichtsensitiven Pixeln auf, außerdem eine Lichtquelle. Die Lichtquelle ist im Bereich des Arrays von sensitiven Pixeln angeordnet, beispielsweise in geringem Abstand von dem Array. Eine Steuerschaltung steuert sowohl den Betrieb der Lichtquelle als auch den Betrieb des Pixelarrays.

In diesem Zusammenhang wird auf diesbezügliche Ausarbeitungen verwiesen, welche die technischen Konzepte und deren Realisierung detailliert beschreiben, insbesondere die Dissertation "Photodetektoren und Auslesekonzepte für 3D-Time-of-Flight-Bildsensoren in 0,35 µm-Standard-CMOS-Technologie", Andreas Spickermann, Fakultät für Ingenieurwissenschaften der, Universität Duisburg-Essen, 2010.

Außerdem wird auf die Publikation "Optimized Distance Measurement with 3D-CMOS Image Sensor and Real-Time Processing of the 3D Data for Applications in Automotive and Safety Engineering", Bernhard König, Fakultät für Ingenieurwissenschaften der Universität Duisburg-Essen, 2008 verwiesen.

Die vorgenannten Arbeiten beschreiben das Konzept und die Realisierung von einsetzbaren optischen Sensorsystemen, so dass im Rahmen dieser Anmeldung auf deren Offenbarung verwiesen wird und nur zum Verständnis der Anmeldung relevante Aspekte erläutert werden.

Die Erfindung betrifft eine Sensoranordnung welche das Time-of-Flight-(ToF)Verfahren nutzt, so dass dieses hier kurz erläutert wird.

Beim ToF-Verfahren wird ein Raumbereich mit einer Lichtquelle beleuchtet und die Laufzeit des von einem Objekt im Raumbereich zurück reflektierten Lichtes mit einem Flächensensor aufgenommen. Dazu sollten Lichtquelle und Sensor möglichst nah zueinander angeordnet sein. Aus dem linearen Zusammenhang von Lichtlaufzeit und Lichtgeschwindigkeit lässt sich die Distanz zwischen Sensor und Messobjekt bestimmen. Zur Messung der zeitlichen Verzögerung muss eine Synchronisation zwischen Lichtquelle und Sensor gegeben sein. Durch die Nutzung gepulster Lichtquellen können die Verfahren optimiert werden, denn kurze Lichtpulse (im ns-Bereich) ermöglichen eine effiziente Hintergrundlichtunterdrückung. Außerdem werden durch die Verwendung des gepulsten Lichts mögliche Mehrdeutigkeiten bei der Bestimmung der Distanz vermieden, so lange der Abstand genügend groß ist.

Einerseits wird bei diesem Konzept die Lichtquelle gepulst betrieben. Außerdem wird die Detektionseinheit, also das Pixelarray gepulst sensitiv geschaltet, also das Integrationsfenster der einzelnen Pixel wird zeitlich mit der Lichtquelle synchronisiert und in der Integrationsdauer begrenzt. Durch den Vergleich von Ergebnissen mit unterschiedlichen Integrationsdauern können insbesondere Effekte von Hintergrundlicht herausgerechnet werden.

Wesentlich ist, dass diese Erfassungsmethode keine bildbasierte Erfassungsmethode ist. Es wir bei jedem Pixel eine Abstandsinformation ermittelt, was durch die zeitlich aufgelöste Lichtdetektion erfolgt. Bei Verwendung eines Pixelarrays liegt schließlich eine Matrix von Abstandswerten vor, welche bei zyklischer Erfassung eine Interpretation und Verfolgung von Objektbewegungen zulässt.

Erfindungsgemäß weist die universell einsetzbare Sensoreinrichtung ein Pixelarray auf, welches sich an automatisiert an verschiedene Einbausituationen anpassen lässt. Dafür wird erfindungsgemäß ein Array mit einer universell einsetzbaren Form und Pixelanzahl verwendet. Die Ansteuer- und Auswerteeinrichtung verfügt im Gegensatz zu bekannten Einrichtungen über einen Initialisierungsmodus oder Einmessmodus. Damit sind von der Ansteuer- und Auswerteeinrichtung mindestens zwei Betriebsmodi der Lichtquelle und des Pixelarrays ansteuerbar, der Initialisierungsmodus und der nach Initialisierung vorgesehene Erfassungsmodus.

In dem Initialisierungsmodus wird durch einen Einmessvorgang der Vorrichtung festgestellt, welche Pixel der eingebauten Sensoreinrichtung bei Berücksichtigung der Einbausituation für eine sensorische Erfassung verfügbar sind. Dazu wird im Initialisierungsmodus die Lichtquelle betrieben und es wird festgestellt, welche Pixel eine mit dem Ansteuerschema der Lichtquelle kompatibles Signalbild aufweisen. Diejenigen Pixel, welche bei einer Ansteuerung der Lichtquelle gemäß einem Initialisierungsschema keine kompatible Signalveränderung zeigen, werden dauerhaft, jedenfalls bis zur nächsten Initialisierung, außer Betrieb genommen oder zumindest bei der Auswertung der Bilddaten und Distanzdaten hinsichtlich ihrer Werte unbeachtet gelassen.

Das Auswertungsschema für das Pixelarray wird also in Abhängigkeit von den Daten, die im Zuge der Initialisierung erhalten werden, angepasst. Entsprechend greift das Auswertungsschema nach einem durchgeführten Initialisierungsvorgang nur auf diejenigen Pixelwerte zurück, die während der Initialisierung im vorgegebenen Maße eine Reaktion auf die Ansteuerung der Lichtquelle gezeigt haben.

Für die Initialisierung selbst können unterschiedliche Ansteuerungsschemata für die Lichtquelle und die Auswerteeinrichtung verwendet werden. Beispielsweise kann die Lichtquelle während der Initialisierung für eine größere Zeitdauer z.B. von einigen Sekunden, angesteuert werden, um Licht abzustrahlen. Während dieser Abstrahldauer wird das Pixelarray mehrfach, für verschiedene Zeitdauern aktiv geschaltet und es wird geprüft, ob in Abhängigkeit von der Dauer der Aktivschaltung auch ein konsistenter Signalzuwachs bei den Pixeln vorliegt. Außerdem werden die Signalantworten über das Pixelfeld verglichen. Auf diese Weise werden in der Steuer- und Auswerteeinrichtung die Pixel entweder als relevante Pixel oder als irrelevante Pixel klassifiziert. Diese Gruppierung wird dauerhaft in der Steuer- und Auswerteeinrichtung gespeichert. Bis zur nächsten Initialisierung wird für die Messungen nur auf die Signale der relevanten Pixel zugegriffen.

Wesentlich ist, dass ein Pixelfeld mit einheitlichen Abmessungen im Detektionsmodus unterschiedliche aktive Feldgrößen haben kann. Eine derartige universelle Sensoreinrichtung kann dann an verschiedenen Positionen des Fahrzeugs und in verschiedenen Einbausituationen zum Einsatz gebracht werden. Baugleiche Sensoranordnungen können beispielsweise für eine Türkontrolle an den B-Säulen der Fahrzeuge montiert werden oder auch für eine Überwachung im Heckbereich oder Frontbereich des Fahrzeugs. An verschiedenen Einbaupositionen ist die freie Sicht des Pixelarrays auf den Detektionsbereich unterschiedlich, z.B. beschränkt durch die Größe der Detektionsöffnungen oder durch sonstige Aufbauten am Fahrzeug.

Wesentlich ist außerdem, dass die Einmessung des Sensorfeldes vollautomatisch im Initialisierungsmodus erfolgt. Anhand des Initialisierungsprotokolls wird durch Lichtquellensteuerung und Steuerung der Auswerteeinrichtung die sensorisch aktivierbare Fläche der Pixel erfasst. Als Kriterien können solche Kriterien herangezogen werden, welche die Unterscheidung der Pixelreaktion erlauben. Erfindungsgemäß kann beispielsweise das Verhalten der Pixel über die Fläche verglichen werden. Zeigen Gruppen von Pixeln bei verschiedenen Messvorgängen unterschiedliche Entfernungen von Objekten an, während andere Pixelgruppen immer dieselben Entfernungen anzeigen, kann davon ausgegangen werden, dass letztere Pixel durch Fahrzeugteile verdeckt sind und keine freie Sicht auf den Detektionsbereich haben. Der Initialisierungsvorgang kann so lange fortgesetzt werden, bis eindeutige Unterscheidungen im Pixelverhalten detektiert werden.

In Anwendung der Erfindung kann für den Einmessvorgang auch eine künstliche Umgebung geschaffen werden. Beispielsweise kann eine dazu vorgesehene halbkugelförmige Anordnung mit ihrer Hohlseite auf Lichtquelle und Sensorfeld gestülpt werden, um eine gleichmäßige Ausleuchtung der Anordnung zu ermöglichen. Eine derartige Halbkugel sorgt dafür, dass eine verlässliche Detektion der tatsächlich aktiven Pixel, also solcher mit freier Sicht zum Detektionsbereich, erfasst wird. Alternativ können nacheinander verschiedene Halbkugeln oder sonstige Objekte vor den Sensor gehalten werden - nur solche Pixel, welche auch eine unterschiedliche Entfernung bei einer Ansteuerung ergeben, gelten als gültige Pixel.

Die Initialisierung an sich kann durch einen Benutzer aufgerufen werden oder bei der Montage des Fahrzeugs einmalig durchgeführt werden. Außerdem kann auch eine Wiederholung der Initialisierung erfolgen, um den jeweils aktuell zugänglichen Bereich für die Detektion einzumessen. Im letztgenannten Fall ist es sogar möglich, die Initialisierung so auszulegen, dass beispielsweise temporäre Aufbauten am Fahrzeug oder sonstige Veränderungen, welche zu einer Beeinträchtigung des Sensorfeldes führen, durch eine Initialisierung der Sensoreinrichtung und entsprechende Deaktivierung der unzugänglichen Pixel berücksichtigt werden.

Gemäß der Erfindung wird also zusätzlich zu dem üblichen Detektionsmodus ein Initialisierungsmodus bereitgestellt, welcher ein Einmessprotokoll durchführt und eine Untergruppe der Pixel als für die Detektion zugängliche Pixel hinterlegt.

Ausschließlich diese Pixel werden bei dem Betrieb der Sensoranordnung anschließend auch ausgewertet.

Die Erfindung wird nun anhand eines Ausführungsbeispiels näher erläutert.
Figur 1 zeigt in schematischer Weise die Einsatzsituation einer patentgemäßen Erfassungsvorrichtung an einem Fahrzeug;
Figur 2 zeigt die wirkenden Komponenten einer Erfassungsvorrichtung in schematischer Darstellung;
Figuren 3a bis 3c zeigen in schematischer Weise ein Sensorfeld in verschiedenen Betriebsmodi.

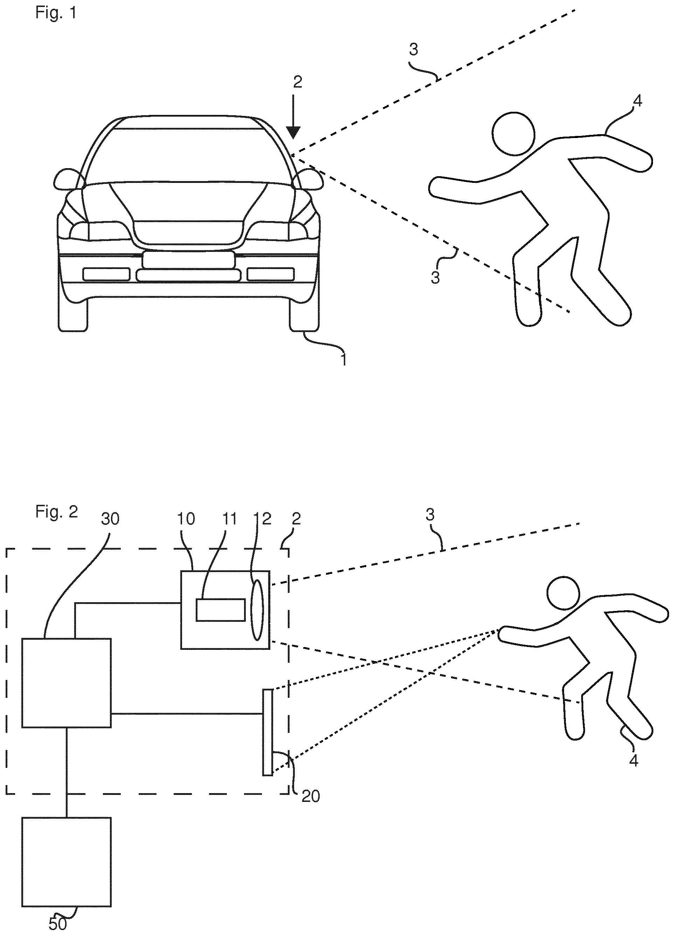

Wie in Figur 1 dargestellt, ist ein Fahrzeug 1 mit einer erfindungsgemäßen Sensoreinrichtung 2 ausgestattet. Die Sensoreinrichtung 2 erfasst Vorgänge und Bewegungen in einem Erfassungsbereich 3, hier durch Linien angedeutet. Ein Benutzer 4, welcher sich dem Fahrzeug nähert, hat die Möglichkeit, in den Erfassungsbereich 3 Bewegungsgesten auszuführen, um Fahrzeugfunktionen abzurufen. In der hier gezeigten Ausführungsform ist die Erfassungsvorrichtung 2 seitlich am Fahrzeug, beispielsweise in der B-Säule untergebracht. Eine derartige Erfassungsvorrichtung kann jedoch auch an beliebiger anderer Stelle des Fahrzeuges, insbesondere im Heckbereich oder im Frontbereich angeordnet sein.

Figur 2 zeigt die Komponenten der Erfassungsvorrichtung 2 in schematischer Darstellung. In dieser Darstellung ist das Fahrzeug 1 nicht gezeigt, um die Darstellung nicht unklar zu gestalten.

Die Einrichtung 2 weist eine Lichtquelle 10 auf, welche in diesem Beispiel aus einer Laserdiode 11 und einer aufweitenden Optik 12 gebildet ist. Die Optik 12 erweitert den Strahlquerschnitt, so dass ein breiter Erfassungsbereich 3 gebildet ist, in welchem ein Benutzer 4 eintreten und in welchem er Bewegungsgesten ausführen kann. Es kann sich hierbei z.B. um eine einfache Kunststoffoptik handeln, z.B. eine Fresnel-Linse.

Ein Detektionsarray 20 ist neben der Lichtquelle angeordnet, ausgerichtet mit dem sensitiven Bereich in Richtung des Erfassungsbereiches 3. Das Array 20 enthält Spalten und Zeilen von sensitiven Pixeln, und ist in diesem Beispiel als CCD-Array ausgebildet. Sowohl die Lichtquelle 10 als auch das Array 20 sind mit einer Steuereinrichtung 30 gekoppelt, welche ein getakteten und zeitgesteuerten Betrieb der Lichtquelle und Erfassungseinrichtung ermöglichen. Wird die Lichtquelle zur Aussendung eines Lichtpulses angesteuert und die Pixelarray-Anordnung zur Erfassung angesteuert, so integrieren die einzelnen Pixel die auftreffende Lichtenergie. Die schließlich nach Integration vorhandenen Ladungen jedes Pixels werden in der Steuereinrichtung ausgewertet, so dass für jeden Pixel ein für den Integrationszeitraum charakteristischer Erfassungswert generiert wird.

Über diese zeitabgestimmte und synchronisierte Ansteuerung sowohl der Lichtquelle 10 als auch der Erfassungseinrichtung 20 ist für jedes Pixel der Erfassungseinrichtung 20 eine Erfassung der Lichtlaufzeit und damit eine Abstandsdetektion möglich. Zu genauen Funktionen wird auf die Offenbarung der oben genannten Veröffentlichungen verwiesen, insbesondere auf die bekannten Time-of-Flight-Einrichtungen.

In der Figur 2 ist beispielhaft dargestellt, dass von der Hand des Benutzers 4 ein Teil des von der Lichtquelle 10 abgestrahlten Lichtes gestreut oder reflektiert wird und auf die Detektionseinrichtung 20 fällt. In der Praxis wird die Lichtinformation selbstverständlich nicht allein von einem Punkt ausgehen, welche das Licht streut oder reflektiert, stattdessen wird eine Integration über das gesamte empfangene Licht von allen sichtbaren Punkten erfolgen. Auch die Umgebung wird zu der Detektionsleistung beitragen. Es sind jedoch Algorithmen und Betriebsweisen der Sensoranordnung bekannt, bei denen das Umgebungslicht weitgehend herausgerechnet werden kann. Insbesondere können mehrere Aufnahmen kurz nacheinander und mit veränderten zeitlichen Parametern erfolgen, um Hintergrundlicht herauszurechnen. Eine solche Erfassung kann insbesondere mit unterschiedlichen Integrationszeiten erfolgen, um Hintergrundeinflüsse zu beseitigen. Wird nämlich beispielsweise der Lichtpuls mit identischer Dauer ausgesendet, jedoch die Integration in ihrer Dauer variiert, so haben die Hintergrundeinflüsse einen linearen Zusammenhang zur Integrationszeit, während die Einflüsse durch den Lichtpuls nur für die Dauer des Lichtpulses bestehen.

Die Steuer- und Auswerteeinrichtung 30 erfasst die Informationen und rechnet diese in einen Array von Abstandsinformationen um. Dadurch kann eine 3D-Karte der Umgebung erstellt werden. Durch eine zeitliche Abfolge von Handsteuerungen kann eine 3D-Information von Raumveränderungen und Objektbewegungen im Erfassungsbereich 3 erfasst werden. Beispielsweise kann das Schwenken einer Hand des Benutzers 4 detektiert werden. Die Steuereinrichtung 30, und über sie die gesamte Erfassungseinrichtung 2 ist mit einer zentralen Steuereinrichtung 50 des Kraftfahrzeuges gekoppelt. Die Erkennung von Bewegungsgesten kann einerseits anhand einer Bibliothek in der Steuer- und Auswerteeinrichtung 30 erfolgen oder eine Zeitfolge von 3D-Raumdaten wird der zentralen Steuereinrichtung 50 zugeleitet, um dort ausgewertet zu werden. Die zentrale Steuereinrichtung 50 initiiert schließlich in Abhängigkeit von den erfassten Daten die Funktionsauslösung des Kraftfahrzeuges, beispielsweise das Absenken einer Seitenscheibe oder die Öffnung einer Tür.

Wie in Figur 1 gezeigt, ist es erforderlich, dass ein Benutzer 4 sich in einen Erfassungsbereich 3 der Detektionseinrichtung 2 begibt, um eine Betätigungsauslösung durchführen zu können. Ein Fahrzeug steht jedoch den überwiegenden Teil seiner Lebensdauer still, in der Erwartung einer Inbetriebnahme. In diesen Zeiten ist es äußerst wichtig, die Leistung bzw. den Strombedarf von sämtlichen Einrichtungen an Fahrzeugen gering zu halten.

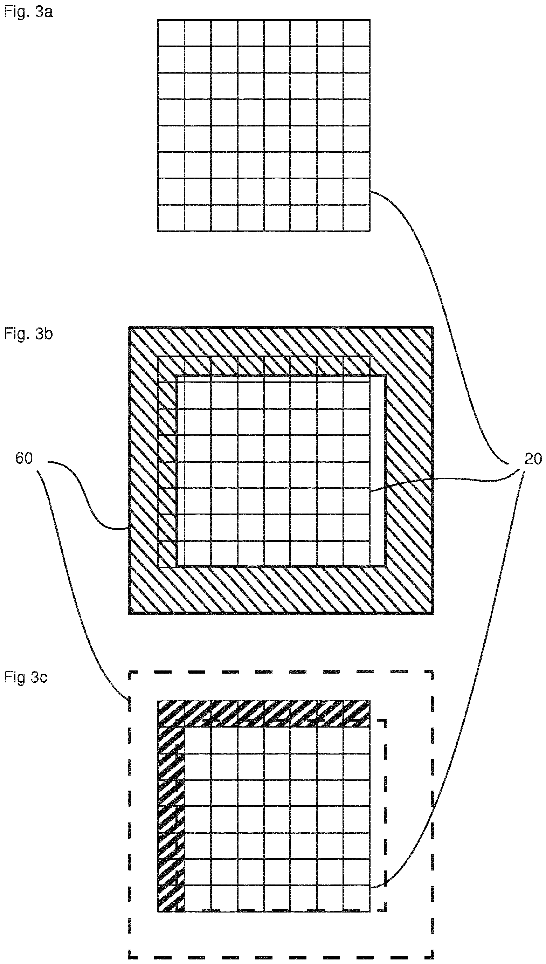

Die Figuren 3a, 3b, 3c zeigen eine schematische Darstellung eines CCD-Arrays, welches zur erfindungsgemäßen Erfassung mit dem Time-of-Flight-Verfahren betreibbar ist. In diesem Beispiel besteht das Array aus einem quadratischen Chip mit 8 Spalten und 8 Zeilen. Dies ist lediglich ein anschaulicher Wert - in der Praxis ist eine deutlich höhere Auflösung möglich. Andererseits braucht ein derartiger Chip nicht ansatzweise die Auflösungen eines optischen Chips für detailreiche Aufnahmen zu haben, um die erfindungsgemäße Gestenerfassung zu ermöglichen. Bereits die Anzahl von 1024 Pixeln erlaubt eine differenzierte Auswertung von Benutzergesten, da für jedes dieser Pixel wiederholte Distanzmessungen durchgeführt werden und ein Bewegungsprofil in zeitlicher Folge erfasst wird. Auch mit einer geringeren Pixelzahl ist immer noch eine verlässliche Gestenerfassung möglich.

Die Figuren 3a bis 3c zeigen schematisch eine Einbausituation und das Resultat eines Einbauvorgangs.

In Figur 3a ist ein Pixelfeld mit acht Zeilen und acht Spalten dargestellt, die grundsätzlich alle für eine Detektion zur Verfügung stehen. In der Montagesituation wird deutlich, dass das Pixelfeld 20 hinter einem Karosserieaufbau 60 mit einer Öffnung eingesetzt ist, wobei die linke Spalte und die obere Zeile des Feldes 20 wenigstens teilweise bedeckt sind. Auf diese Weise ist in den betreffenden Zellen in dieser Spalte und dieser Zeile keine verlässliche Detektion möglich. In diesem Zustand wird ein Initialisierungsvorgang ausgelöst. Die Steuer- und Auswerteschaltung steuert die Lichtquelle an, um für eine Dauer von z.B. 5 Sekunden Licht auszusenden. Während dieser Zeit wird die Umgebung der Sensoreinrichtung unverändert gelassen oder beispielsweise durch die Abdeckung mit einer hellen Kunststoffhalbschale, welche mit ihrem Hohlraum sowohl Lichtquelle als auch Detektionseinrichtung überdeckt, eine künstliche Umgebung geschaffen. Das Sensorfeld 20 wird nun für unterschiedliche Zeitspannen innerhalb dieses 5-Sekunden-Fensters aktiviert und die jeweiligen Helligkeitswerte werden gespeichert. Weitere Messungen werden bei Ausgeschalteter Lichtquelle durchgeführt. Zeigen die Pixel in der Mitte des Pixelfeldes 20 signifikante Helligkeitsänderungen, die Pixel in den Randbereichen jedoch nicht, werden diese Randpixel deaktiviert, welche eine Dynamik unterhalb eines vorgegebenen Schwellwertes zeigen. Diese Pixel werden als Gruppe von irrelevanten Pixeln in der Steuer- und Auswerteeinrichtung zugeordnet und abgespeichert.

Als weitere oder alternative Messung wird gemäß den üblichen zeitaufgelösten Messungen einer Time-of-Flight-Auswertung eine Folge von Kurzmessungen durchgeführt. Wiederum wird geprüft, ob die Pixelantworten konsistent sind, also ob beispielsweise die Pixel im mittleren Bereich veränderliche Entfernungswerte liefern und die Pixel im Randbereich damit konsistente Werte liefern.

Anhand der so gewonnenen Messdaten kann einerseits erkannt werden, ob grundsätzlich eine freie Sicht der Pixel in die Messumgebung gewährleistet ist und andererseits, ob sinnvolle Daten bezüglich der Messdistanz ermittelbar sind. Für sämtliche Pixel, die gemäß der Auswertung keine freie Sicht zu dem detektierten Messbereich haben wird eine Deaktivierung der Pixel für die nachfolgenden Detektionsvorgänge in den Speicher der Steuer- und Auswerteeinrichtung geschrieben.

Das Auswerteschema der Steuer- und Auswerteeinrichtung wird nach der Initialisierung angepasst, so dass für nachfolgende Distanzmessungen und Raumerfassungen ausschließlich die als gültig erkannten Pixel eingesetzt werden. Dafür sind in der Steuer- und Auswerteeinrichtung skalierbare Auswerteschemata für räumliche Bewegungsabläufe hinterlegt. Diese Auswerteschemata können auf die tatsächlich aktive Pixelfläche intern skaliert werden. Alternativ kann die Sensoranordnung auch mit der inaktiven Sensoreinrichtung eingelernt werden, indem Bewegungsgesten ausgeführt werden, die als gültige Bewegungsgesten in einem neuronalen Netzwerk abgespeichert werden.

## Patentansprüche

1. Sensoreinrichtung (2) für ein Kraftfahrzeug (1), mit einer Lichtquelle (10) und einer Erfassungseinrichtung (20), wobei die Erfassungseinrichtung mit einem Array von optischen Pixeln gebildet ist,
wobei die Lichtquelle (10) und die Erfassungseinrichtung (20) mit einer Steuer- und Auswerteeinrichtung (30) gekoppelt sind, welche die Lichtquelle (10) zur Abgabe von Lichtpulsen ansteuert und die Erfassungseinrichtung zur Erfassung ansteuert sowie die erfassten Signale der Erfassungseinrichtung (20) auswertet,
wobei die Steuer- und Auswerteeinrichtung (30), die Erfassungseinrichtung (20) und die Lichtquelle (10) als Time-of-Flight-Kamera (ToF-Kamera) zusammenwirken, so dass räumliche Entfernungsdaten erfasst werden, und wobei die Steuer- und Auswerteeinrichtung (30) ausgebildet ist, um die Lichtquelle und die Erfassungseinrichtung in wenigstens zwei Modi, nämlich einerseits einem Initialisierungsmodus und andererseits einem Messmodus zu betreiben, **dadurch gekennzeichnet, dass** in dem Initialisierungsmodus durch einen Einmessvorgang festgestellt wird, welche Pixel der eingebauten Sensoreinrichtung bei Berücksichtigung der Einbausituation für eine sensorische Erfassung verfügbar sind,
wobei die Steuer- und Auswerteeinrichtung (30) die Lichtquelle und die Erfassungseinrichtung im Initialisierungsmodus ansteuert und wenigstens einmal die Signale sämtlicher Pixel abfragt und in Abhängigkeit von dem Ergebnis der Abfrage jedes Pixel entweder in eine Gruppe von relevanten Pixeln oder in eine Gruppe von irrelevanten Pixeln einordnet, wobei die Steuer- und Auswerteeinrichtung diese Zuordnung speichert,
wobei die Steuer- und Auswerteeinrichtung in Abhängigkeit von dem Ergebnis der Auswertung im Initialisierungsmodus die Erfassung im Messmodus dauerhaft derart anpasst, so dass nur die Signale der Pixel aus der Gruppe der relevanten Pixel bei der Messung berücksichtigt werden.

2. Sensoreinrichtung nach Anspruch 1, wobei die Steuer- und Auswerteeinrichtung die Lichtquelle (10) im Initialisierungsmodus in anderer Weise ansteuert als im Messmodus.

3. Sensoreinrichtung nach Anspruch 2, wobei die Steuer- und Auswerteeinrichtung die Lichtquelle (10) im Initialisierungsmodus zur Abstrahlung im ungepulsten Betrieb ansteuert.

4. Sensoreinrichtung nach Anspruch 2, wobei die Steuer- und Auswerteeinrichtung die Lichtquelle (10) im Initialisierungsmodus zur zeitlich versetzten Abstrahlung von verschiedenen Lichtstärken ansteuert.

5. Sensoreinrichtung nach einem der vorangehenden Ansprüche, wobei die Steuer- und Auswerteeinrichtung im Initialisierungsmodus mehrere Erfassungen vornimmt und die Signaldynamik der Pixel über das Array vergleicht, um Pixel mit einer Signaldynamik unterhalb eines vorgegebenen Schwellenwertes als irrelevante Pixel einzuordnen.

## Claims

1. Sensor device (2) for a motor vehicle (1), having a light source (10) and a detection device (20), the detection device being formed with an array of optical pixels,
wherein the light source (10) and the detection device (20) are coupled to a control and evaluation device (30) which controls the light source (10) to emit light pulses and controls the detection device for detection and evaluates the detected signals of the detection device (20),
wherein the control and evaluation device (30), the detection device (20) and the light source (10) cooperate as a time-of-flight camera (ToF camera) so that spatial distance data are detected,
and wherein the control and evaluation device (30) is designed to operate the light source and the detection device in at least two modes, namely an initialization mode on the one hand and a measurement mode on the other hand,
**characterized in that**
in the initialization mode it is determined by a calibration process which pixels of the installed sensor device are available for sensory detection when the installation situation is taken into account,
the control and evaluation device (30) controls the light source and the detection device in the initialization mode and samples the signals of all pixels at least once and, depending on the result of the sampling, assigns each pixel either to a group of relevant pixels or to a group of irrelevant pixels, the control and evaluation device storing this assignment,
wherein the control and evaluation device, depending on the result of the evaluation in the initialization mode, permanently adapts the detection in the measurement mode in such a way that only the signals of the pixels from the group of relevant pixels are taken into account during a measurement.

2. Sensor device according to claim 1, wherein the control and evaluation device controls the light source (10) in a different manner in the initialization mode than in the measurement mode.

3. Sensor device according to claim 2, wherein the control and evaluation device controls the light source (10) in the initialization mode for radiation in unpulsed operation.

4. Sensor device according to claim 2, wherein the control and evaluation device controls the light source (10) in the initialization mode for the temporally offset emission of light with different light intensities.

5. Sensor device according to any one of the preceding claims, wherein the control and evaluation device makes a plurality of acquisitions in initialization mode and compares the signal dynamics of the pixels across the array to classify pixels with signal dynamics below a predetermined threshold as irrelevant pixels.

## Revendications

1. Dispositif de détection (2) pour un véhicule à moteur (1), comportant une source de lumière (10) et un dispositif de détection (20), le dispositif de détection étant formé d'un réseau de pixels optiques,
dans lequel la source de lumière (10) et le dispositif de détection (20) sont couplés à un dispositif de commande et d'évaluation (30) qui commande la source de lumière (10) pour émettre des impulsions lumineuses et commande le dispositif de détection pour la détection et évalue les signaux détectés du dispositif de détection (20),
dans lequel le dispositif de commande et d'évaluation (30), le dispositif de détection (20) et la source de lumière (10) coopèrent comme une caméra à temps de vol (caméra ToF) de sorte que les données de distance spatiale sont détectées,
et dans lequel le dispositif de commande et d'évaluation (30) est conçu pour faire fonctionner la source de lumière et le dispositif de détection dans au moins deux modes, à savoir d'une part un mode d'initialisation et d'autre part un mode de mesure,
**caractérisé en ce que**, dans le mode d'initialisation, il est déterminé par un processus de calibrage quels pixels du dispositif de détection installé sont disponibles pour la détection sensorielle lorsque la situation d'installation est prise en compte,
le dispositif de commande et d'évaluation (30) commande la source lumineuse et le dispositif de détection en mode d'initialisation et interroge au moins une fois les signaux de tous les pixels et, en fonction du résultat de l'interrogation, affecte chaque pixel soit à un groupe de pixels pertinents, soit à un groupe de pixels non pertinents, le dispositif de commande et d'évaluation mémorisant cette affectation,
dans lequel le dispositif de commande et d'évaluation, en fonction du résultat de l'évaluation dans le mode d'initialisation, adapte en permanence la détection dans le mode de mesure de telle sorte que seuls les signaux des pixels du groupe de pixels pertinents sont pris en compte dans la mesure.

2. Dispositif de détection selon la revendication 1, dans lequel le dispositif de commande et d'évaluation commande la source de lumière (10) d'une manière différente dans le mode d'initialisation que dans le mode de mesure.

3. Dispositif de détection selon la revendication 2, dans lequel le dispositif de commande et d'évaluation commande la source de lumière (10) dans le mode d'initialisation pour un rayonnement en mode non pulsé.

4. Dispositif de détection selon la revendication 2, dans lequel le dispositif de commande et d'évaluation commande la source de lumi ère (10) dans le mode d'initialisation pour l'émission échelonnée dans le temps de différentes intensités lumineuses.

5. Dispositif de détection selon l'une quelconque des revendications précédentes, dans lequel le dispositif de commande et d'évaluation effectue une pluralité d'acquisitions dans le mode d'initialisation et compare la dynamique du signal des pixels à travers le réseau pour classer les pixels dont la dynamique du signal est inférieure à un seuil prédéterminé comme des pixels non pertinents.
